(19) Europäisches Patentamt
European Patent Office
Office européen des brevets

(11) **EP 2 615 409 B1**

(12) **EUROPEAN PATENT SPECIFICATION**

(45) Date of publication and mention
of the grant of the patent:
**15.01.2014 Bulletin 2014/03**

(51) Int Cl.:
***G01B 5/00*** *(2006.01)* ***G01B 21/04*** *(2006.01)*

(21) Application number: **13000067.2**

(22) Date of filing: **08.01.2013**

(54) **Measurement coordinate correction method, computer program product and coordinate measuring device**

Messkoordinaten-Berichtigungsverfahren, Computerprogrammprodukt und Koordinatenmessvorrichtung

Procédé de correction de coordonnées de mesure, produit de programme d'ordinateur et dispositif de mesure de coordonnées

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.01.2012 JP 2012005309**

(43) Date of publication of application:
**17.07.2013 Bulletin 2013/29**

(73) Proprietor: **Mitutoyo Corporation**
**Kawasaki-shi**
**Kanagawa 213-8533 (JP)**

(72) Inventors:
• **Fukuda, Mitsuru**
**Tochigi 321-0923 (JP)**
• **Mizukami, Kazumi**
**Tochigi 321-0923 (JP)**
• **Anzai, Hirotada**
**Tochigi 321-0923 (JP)**
• **Ono, Noritsugu**
**Tochigi 321-0923 (JP)**

(74) Representative: **Müller-Boré & Partner**
**Patentanwälte**
**Grafinger Straße 2**
**81671 München (DE)**

(56) References cited:
**EP-A2- 1 559 990 WO-A1-2009/013769**
**DE-A1- 10 214 489**

**Description**

BACKGROUND OF THE INVENTION

1. Field of the Invention

The present invention relates to a measurement coordinate correction method, a computer program product and a coordinate measuring device, particularly a three-dimensional measurer.

2. Description of Related Art

Conventionally, a measurement coordinate correction method has been offered as a method for improving degradation in measurement accuracy in a three-dimensional measurer accompanying deformation of a base when a weighty measured object is placed on the base (see, for example, Japanese Patent Laid-open Publication No. 2005-214943). The measurement coordinate correction method of Japanese Patent Laid-open Publication No. 2005-214943 includes steps (1) to (3) below:

(1) A step where, when various kinds of weighty measured objects have been placed on the three-dimensional measurer, a geometric error of the three-dimensional measurer is gauged, correction parameters are obtained from the gauged results for each measured object weight, and the correction parameters are stored in a memory.
(2) A step where the weight of the measured object to be measured is input.
(3) A step where the correction parameters corresponding to the weight of the measured object input in step (2) are read from the memory and the measurement coordinates of the measured object to be measured are corrected.

The way a base deforms when a weighty measured object is placed thereon depends on the weight of the measured object, and also depends on a position of the measured object on the base. However, in the measurement coordinate correction method of Japanese Patent Laid-open Publication No. 2005-214943, attention is paid only to the weight of the measured object and measurement coordinates for the measured object to be measured are corrected with correction parameters corresponding exclusively to the weight of the measured object. Specifically, when the position of the measured object on the base varies, the way the base deforms also varies. Thus, because the measurement coordinates are corrected with the correction parameters corresponding exclusively to the weight of the measured object, measurement accuracy may not be sufficiently improved.
WO 2009/013769 A1 discloses a method of compensating the measurement errors of a measuring machine that derive from the deformations of the machine bed caused by the load exerted by the workpiece to be measured on the machine bed, comprising a first acquisition step in which data regarding the weight of the workpiece and the modes of resting of the workpiece on the machine bed are acquired, and a second calculation step in which correction values depending upon said data are calculated.
DE 102 14 489 A1 discloses a method for determination of guidance errors in a coordinate measurement instrument with a moving measurement head and guidance means for the measurement head together with scales for identification of the coordinates of the measurement head, wherein the guidance errors are assigned to a particular factor. The guidance errors are then determined as a function of the factors using finite element calculations.

SUMMARY OF THE INVENTION

It is an object of the present invention to improve measurement accuracy in connection with coordinate measurements and/or measurement coordinate corrections.
This object is solved according to the invention by the features of the independent claims. Particular embodiments of the invention are subject of the dependent claims.
According to one aspect of the present invention there is provided a measurement coordinate correction method correcting measurement coordinates of a measured object placed on a base. The measurement coordinate correction method includes a weight acquiring step acquiring information related to a weight of the measured object; a position acquiring step acquiring information related to a position of the measured object on the base; and a correcting step correcting the measurement coordinates of the measured object based on the weight and position of the measured object.
In the present invention, the weight acquiring step, the position acquiring step, and the correcting step correct the measurement coordinates of the measured object. Thus, the measurement coordinates of the measured object can be corrected in light of the deformation of the base corresponding to the position of the measured object on the base and not exclusively from the weight of the measured object. Accordingly, the deformation of the base can be correctly surmised and the measurement accuracy of the measured object can be sufficiently improved. In the measurement coordinate correction method of a further embodiment of the present invention, a plurality of weight sensors are preferably attached to the base, the weight sensors detecting a load from the measured object which is placed on the base. The weight acquiring step preferably acquires information related to the weight of the measured object by calculating the weight of the measured object based on a detected value from each of the plurality of weight sensors. The position acquiring step preferably acquires information related to the position of the measured object by calculating the position of the measured object based on placement positions of the plurality of weight sensors and the detected value from each of the plurality of weight sensors.

When a control device such as a PC (Personal Computer) or any other electronic processing device executes the weight acquiring step, the position acquiring step, and the correcting step, the control device may execute one of the following processes (A) and (B) as the weight acquiring step and the position acquiring step:

(A) In the weight acquiring step and the position acquiring step, the control device acquires information related to each of the weight of the measured object and the position of the measured object on the base, which are input by the user via an inputter such as a mouse or a keyboard.

(B) In the weight acquiring step, the control device calculates the weight of the measured object based on the detected value from each of the plurality of weight sensors attached to the base. Similarly, in the position acquiring step, the control device calculates the position of the measured object on the base based on the placement positions of the plurality of weight sensors and the detected value from each.

Particularly, the control device executes process (B). Thus, compared with a configuration in which the control device executes process (A), an operation on the inputter in which the user inputs information related to the weight and position of the measured object can be omitted. Convenience is thus improved.

Further particularly, the correcting step preferably includes a deformation amount calculation protocol and a measurement coordinate correction protocol. The deformation amount calculation protocol calculates an amount of deformation of the base at a plurality of position (particularly at each position) on the base based on the weight and position of the measured object. The measurement coordinate correction protocol corrects the measurement coordinates of the measured object based on the amount of deformation of the base.

When the control device such as the PC executes the weight acquiring step, the position acquiring step, and the correcting step, the control device may execute one of the following processes (C) and (D) as the acquiring step.

(C) As preliminary preparation, the weight and position of the measured object placed on the base is changed to various weights and positions, then correction parameters for correcting measurement coordinates for the measured object in each case are calculated and each of the correction parameters is stored in the memory for each weight and position of the measured object. In addition, after the weight acquiring step and the position acquiring step, the control device reads the correction parameters corresponding to the weight and position of the measured object from the memory, then corrects the measurement coordinates of the measured object based on the correction parameters.

(D) After the weight acquiring step and the position acquiring step, the control device calculates an amount of deformation of the base at a plurality of positions (particularly at each position) on the base based on the weight and position of the measured object. Then, based on the calculated amount of deformation, the control device corrects the measurement coordinates of the measured object.

Further particularly, the control device executes process (D). Thus, compared with a configuration in which the control device executes process (C), preliminary preparation is unnecessary and time and effort involved in performing the measurement coordinate correction method can be largely reduced.

Particularly, the correcting step preferably reads the correction parameters corresponding to the weight and position of the measured object from the memory, then corrects the measurement coordinates of the measured object based on the correction parameters.

Further particularly, the control device executes process (C). Thus, compared with a configuration in which the control device executes process (D), there is no need for the control device to calculate the amount of deformation of the base at a plurality of positions (particularly at each position) on the base, and thus the processing load on the control device can be largely reduced.

According to a further aspect of the invention, there is provided a computer program product, in particular tangibly embodied on a computer-readable storage medium, or embodied as a data signal or stream, comprising computer-readable instructions which, when loaded and executed on a suitable system perform the steps of a measurement coordinate correction method according to the above aspect of the invention or a particular embodiment thereof..

According to a further aspect of the invention, there is provided a coordinate measuring device, particularly a three-dimensional measurer, measuring the measured object placed on the base. The measuring device includes a weight acquirer, a position acquirer, and a corrector. The weight acquirer acquires information related to the weight of the measured object. The position acquirer acquires information related to the position of the measured object on the base. The corrector corrects the measurement coordinates of the measured object based on the weight and position of the measured object.

Thus, the coordinate measuring device, particularly the three-dimensional measurer, is a device that particularly performs the measurement coordinate correction method described above and thus enjoys effects and results similar to the measurement coordinate correction method described above.

According to the invention, a plurality of weight sensors are attached to the base , wherein: the weight acquirer is configured to acquire, via the weight sensors, a load from the measured object placed on the base , wherein information is acquired related to the weight of the measured object by calculating the weight of the measured object based on a detected value from each of the plurality of weight sensors; and the position acquirer acquires information related to the position of the measured object by calculating the position of the measured object based on placement positions of the plurality of weight sensors and the detected value from each of the plurality of weight sensors.

Particularly, said corrector: calculates, via a deformation amount calculation protocol, an amount of deformation of the base at a plurality of positions, particularly at each position, on the base based on the weight and/or position of the measured object; and corrects, via a measurement coordinate correction protocol, the measurement coordinates of the measured object based on the amount of deformation of the base.

Still further particularly, said corrector reads the correction parameters corresponding to the weight and position of the measured object from a memory, then correcting the measurement coordinates of the measured object based on the correction parameters.

## BRIEF DESCRIPTION OF THE DRAWINGS

The present invention is further described in the detailed description which follows, in reference to the noted plurality of drawings by way of non-limiting examples of exemplary embodiments of the present invention, in which like reference numerals represent similar parts throughout the several views of the drawings. It should be understood that even though embodiments are separately described, single features thereof may be combined to additional embodiments.

Fig. 1 is a block diagram illustrating a schematic configuration for a coordinate measuring device (particularly a three-dimensional measurer) according to a first embodiment of the present invention;

Fig. 2 is an overall frame view illustrating a main body of the coordinate measuring device according to the first embodiment of the present invention;

Fig. 3 is a lateral frame view of a portion of the main body of the coordinate measuring device according to the first embodiment of the present invention;

Fig. 4 is a frame view illustrating exemplary placement positions for weight sensors according to the first embodiment of the present invention;

Fig. 5 is a flowchart describing a measurement coordinate correction method according to the first embodiment of the present invention;

Fig. 6 is a frame view to describe an amount of change in pitch according to the first embodiment of the present invention; and

Fig. 7 is a block diagram illustrating a schematic configuration for a coordinate measuring device (particularly a three-dimensional measurer) according to a second embodiment of the present invention.

## DETAILED DESCRIPTION OF THE INVENTION

The particulars shown herein are by way of example and for purposes of illustrative discussion of the embodiments of the present invention only and are presented in the cause of providing what is believed to be the most useful and readily understood description of the principles and conceptual aspects of the present invention. In this regard, no attempt is made to show structural details of the present invention in more detail than is necessary for the fundamental understanding of the present invention, the description is taken with the drawings making apparent to those skilled in the art how the forms of the present invention may be embodied in practice.

[First Embodiment

A first particular embodiment of the present invention is described below with reference to the drawings.

[Overview Configuration of Three-dimensional Measurer

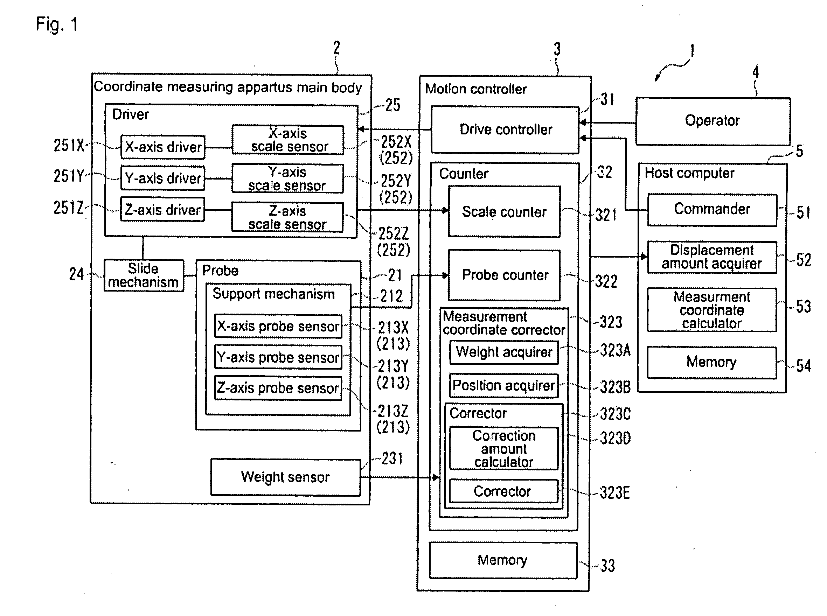

Fig. 1 is a block diagram illustrating a schematic configuration for a three-dimensional measurer 1 as an example of a coordinate measuring device according to the first embodiment of the present invention. As shown in Fig. 1, the three-dimensional measurer 1 includes a three-dimensional measurer main body 2; a motion controller 3 exercising drive control of the three-dimensional measurer main body 2; an operator 4 providing at least one command to the motion controller 3 particularly via an operating lever or the like in order to manually operate or control the three-dimensional measurer main body 2; and a host computer 5 providing a specified (predetermined or predeterminable) command to the motion controller 3 and/or executing calculation processes. It should be understood that the invention may be applied also to coordinate measuring devices measuring coordinates different from three-dimensional coordinates, e.g. to devices measuring two-dimensional coordinates or angular coordinates.

[Configuration of Three-dimensional Measurer Main Body

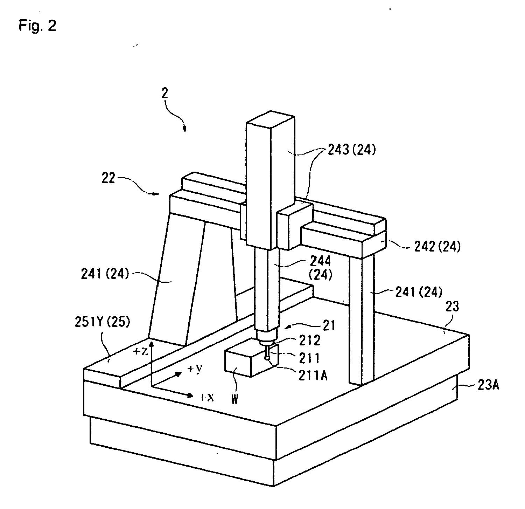

Fig. 2 is an overall frame view illustrating the three-dimensional measurer main body 2. Moreover, in Fig. 2, an upward direction is referred to as a +Z-axis  direction and two axes orthogonal to the Z axis are referred to as an X axis and a Y axis, respectively. Later drawings use a similar nomenclature. As shown in Fig. 2, the three-dimensional measurer main body 2 includes a probe 21, a drive mechanism 22, and a base 23 on which the drive mechanism 22 stands. The probe 21 includes a (particularly substantially spherical) measurement head 211A for measuring a measured object W. The drive mechanism 22 holds a base end-side of the probe 21 and drives the probe 21.

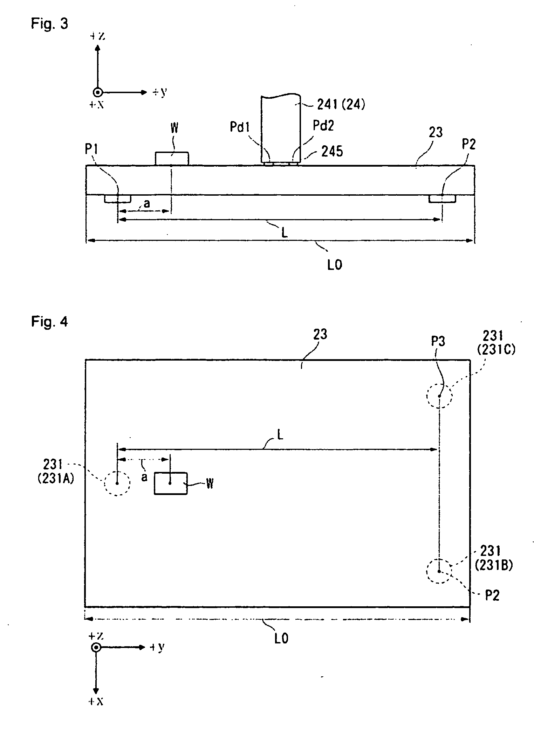

Fig. 3 is a lateral (+X-axis side) frame view of a portion of the three-dimensional measurer main body 2. The base 23 is a portion on which the measured object W is placed, and is positioned such that a top surface of the base 23 coincides with the horizontal plane. In addition, as shown in Fig. 3, one or more, particularly a plurality of weight sensors 231 are positioned on a bottom surface of base 23, the weight sensor(s) 231 detecting a load from the measured object W placed on the base 23 and outputting a signal corresponding to the detected value to the motion controller 3. The weight sensors 231 may be exemplified by, for instance, a configuration in which a distortion gauge is embedded in the base 23 and/or an anti-vibration stage 23A (Fig. 2) to detect the load from the measured object W based on an amount of distortion in the base 23 and/or the anti-vibration stage 23A.

Fig. 4 is a frame view illustrating exemplary placement positions for the weight sensors 231. In the present embodiment, specifically three weight sensors 231 are placed on or at the bottom surface of the base 23, as shown in Fig. 4. Of the three weight sensors 231, as shown in Fig. 4, a first weight sensor 231A is placed on or at the bottom surface of the base 23 on a -Y-axis side and in a substantially central X-axis direction position. In contrast, a second weight sensor 231B and a third weight sensor 231C, as shown in Fig. 4, are placed on or at the bottom surface of the base 23 on a +Y-axis side substantially aligned in the X-axis direction. In addition, as shown in Fig. 4, first to third placement positions P1 - P3 for the first to third weight sensors 231A - 231C particularly configure an isosceles triangle in which the second placement position P2 and the third placement position P3 create a straight line forming a base side of the triangle.

The drive mechanism 22 holds the base-end side of the probe 21 and particularly additionally includes a slide mechanism 24 enabling displacement of the probe 21  and/or a driver 25 driving the probe 21 by driving the slide mechanism 24. As shown in Fig. 2, the slide mechanism 24 particularly includes two columns 241, a beam 242, a slider 243, and a ram 244. The two columns 241 extend in the +Z-axis direction from both sides in the X-axis direction on the base 23 and are provided so as to be slide-displaceable along the Y-axis direction. In the present embodiment, as shown in Fig. 3, an air bearing 245 particularly is provided to a -Z-axis-direction end on each of the two columns 241. As shown in Fig. 3, the air bearings 245 include a first air pad Pd1 and/or a second air pad Pd2 expelling compressed air. By expelling the compressed air from the first and/or second air pads Pd1 and Pd2, the two columns 241 are supported in a state floating above the base 23.

The beam 242 is supported by each of the columns 241 and substantially extends along the X-axis direction. The slider 243 is provided so as to be slide-displaceable on the beam 242 along the X-axis direction. The ram 244 is inserted into an interior of the slider 243 and is provided so as to be slide-displaceable within the slider 243 in a direction crossing the movement direction of the slider 243 e.g. substantially along the Z-axis direction. Accordingly, the drive mechanism 22 includes a plurality of drive shafts driving the probe 21 in each of the X-, Y-, and Z-axis directions. The ram 244 holds the base-end side of the probe 21 in a -Z-axis-direction end of the ram 244. Moreover, one or more, particularly a plurality of varieties of probes may be prepared and the probe 21 may be selected from among these and held or positioned by the ram 244.

The driver 25, as shown in Fig. 1 or Fig. 2, includes X-, Y-, and Z-axis drivers 251 X, 251Y, and 251Z. Of the columns 241, the Y-axis driver 251Y drives the -X-axis direction column 241 along the Y-axis direction. The X-axis driver 251X slides over the beam 242 and drives the slider 243 along the X-axis direction. The Z-axis driver 251Z slides within the slider 243 and drives the ram 244 in the Z-axis direction.

As shown in Fig. 1, each of the X-, Y-, and Z-axis drivers 251X, 251Y, and 251Z particularly includes an X-, Y-, and Z-axis scale sensor 252X, 252Y, and 252Z, respectively, for detecting a position in each axial direction for the slider 243, each of the columns 241, and the ram 244. Moreover, each of the scale sensors 252 is a position sensor outputting a pulse signal corresponding to an amount of displacement of the slider 243, each of the columns 241, and the ram 244.

The probe 21, as shown in Fig. 1 or Fig. 2, includes a stylus 211 (Fig. 1) having the measurement head 211 A (particularly at a distal side or forefront end-side thereof) and/or a support mechanism 212 supporting the base end-side of the stylus 211. The support mechanism 212 supports the stylus 211 so as to position the stylus 211 in a specified (predetermined or predeterminable) position particularly by biasing the stylus 211 in each of the X-, Y-, and Z-axis directions. In a case where an outside force is applied to the measurement head 211A (i.e., when the measurement head 211A contacts the measured object W), displacement of the stylus 211 is enabled in each of the X-, Y-, and Z-axis directions within a specified (predetermined or predeterminable) range. As shown in Fig. 1, the support mechanism 212 includes an X-axis probe sensor 213X, a Y-axis probe sensor 213Y, and/or a Z-axis probe sensor 213Z for detecting a position of the stylus 211 in the respective (particularly each) axial direction. Moreover, each of the probe sensors 213 is a position sensor outputting a pulse signal corresponding to an amount of displacement for the stylus 211 in each of the axial directions, similar to each of the scale sensors 252.

[Configuration of Motion Controller

As shown in Fig. 1, the motion controller 3 particularly includes a drive controller 31 controlling the driver 25 in response to a command from at least one of the operator 4 and the host computer 5; a counter 32 counting the pulse signals; and/or a memory 33 storing the data to be used by the motion controller 3. As shown in Fig. 1, the counter 32 includes a scale counter 321, a probe counter 322, and a measurement coordinate corrector 323. The scale counter 321 gauges the amount of displacement of the slide mechanism 24 particularly by taking a count of the pulse signals output from each of the scale sensors 252. The probe counter 322 gauges the amount of displacement of the probe 21 particularly by taking a count of the pulse signals output from each of the probe sensors 213. The amount of displacement for the slide mechanism 24 and the probe 21 gauged by the scale counter 321 and the probe counter 322, respectively, is output to the host computer 5.

The measurement coordinate corrector 323 corrects an error in the measurement coordinates accompanying deformation of the base 23 when the weight measured object W is placed on the base 23. As shown in Fig. 1, the measurement coordinate corrector 323 particularly includes a weight acquirer 323A, a position acquirer 323B, and/or a corrector 323C. The weight acquirer 323A acquires information related to the weight of the measured object W. The position acquirer 323B acquires information related to the position of the measured object W on the base 23.

The corrector 323C corrects the measurement coordinates of the measured object W calculated by the host computer 5 (measurement coordinate calculator 53) based on the weight and position of the measured object W. As shown in Fig. 1, the corrector 323C includes a correction amount calculator 323D and/or a corrector unit 323E. Based on the weight and the position of the measured object W, the correction amount calculator 323D calculates an amount of correction for correcting the measurement coordinates of the measured object W calculated by the host computer 5. Based on the amount of correction calculated by the correction amount calculator 323D, the corrector unit 323E corrects the measurement coordinates of the measured object W calculated by the host computer 5.

[Configuration of Host Computer

The host computer 5 includes a CPU (Central Processing Unit) and a memory and controls the three-dimensional measurer main body 2 by providing specified (predetermined or predeterminable) commands to the motion controller 3. As shown in Fig. 1, the host computer 5 particularly includes a commander 51, a displacement amount acquirer 52, the measurement coordinate calculator 53, and/or a memory 54 storing data to be used by the host computer 5.

The commander 51 provides a specified (predetermined or predeterminable) command to the drive controller 31 of the motion controller 3 in order to drive the slide mechanism 24 of the three-dimensional measurer main body 2. Specifically, the commander 51 outputs a position command value for driving the measurement head 211A. Moreover, outline data for the measured object W is stored in the memory 54. The displacement amount acquirer 52 acquires an amount of displacement gauged by the counter 32 for the probe 21 and the drive mechanism 22 (the slide mechanism 24). At this point, the displacement amount acquirer 52 acquires the amount of displacement for the probe 21 based on an orthogonal coordinate system defined by the probe 21 and acquires the amount of displacement for the drive mechanism 22 based on an orthogonal coordinate system defined by the drive mechanism 22.

The measurement coordinate calculator 53 calculates or determines the measurement coordinates of the measured object W (i.e., the position of the measurement head 211A) based on the amount of displacement for the probe 21 and the drive mechanism 22 acquired by the displacement amount acquirer 52. Moreover, the amount of displacement for the drive mechanism 22 is adjusted so as to indicate the position of the measurement head 211A when absolutely no displacement of the stylus 211 within the support mechanism 212 occurs (i.e., when the amount of displacement for the probe 21 is 0).

[Measurement Coordinate Correction Method

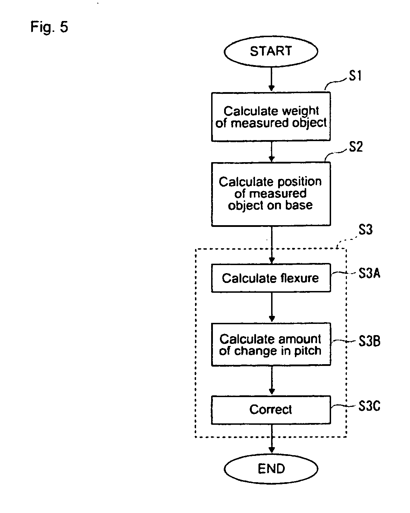

Fig. 5 is a flowchart describing the measurement coordinate correction method. Next, processes of the measurement coordinate corrector 323 (measurement coordinate correction method) are described. Moreover, hereafter, to facilitate description, the measurement of the measured object W placed on the base 23 is treated as complete and the measurement coordinates as already calculated by the measurement coordinate calculator 53. First, the weight acquirer 323A acquires information related to the weight of the measured object W (step S1: weight acquiring step). In the present embodiment, the weight acquirer 323A acquires information related to the weight of the measured object W by inputting signals output from each of the weight sensors 231, then calculating the weight of the measured object W based on the detected or determined values from each of the weight sensors 231. Specifically, the weight acquirer 323A combines the detected values from each of the weight sensors 231 to calculate a weight P of the measured object W.

After step S1, the position acquirer 323B acquires information related to the position of the measured object W on the base 23 (step S2: position acquiring step). In the present embodiment, the position acquirer 323B acquires information related to the position of the measured object W by calculating the position of the measured object W on the base 23 based on the first to third placement positions P1 - P3 of each of the weight sensors 231 and on the detected values from each of the weight sensors 231. Specifically, from the memory 33, the position acquirer 323B reads a separation distance L in the Y-axis direction between the first weight sensor 231A and the second and third weight sensors 231B and 231C (Figs. 3 and 4). Then, using the first placement position P1 of the first weight sensor 231A as a base line, the position acquirer 323B calculates a distance a in the Y-axis direction running from the first placement position P1 to the placement position of the measured object W (Figs. 3 and 4), based on the separation distance L and the detected values from each of the weight sensors 231. The distance a is calculated as the position of the measured object W.

For example, the weight P, the separation distance L, detected values R1 to R3 from the first to third weight sensors 231 (reactive force for the first to third weight sensors 231A - 231C), and the distance a have a relationship described by one of Formula (1) and Formula (2) below.
[Formula 1

$$R1 = \frac{(L - a)}{L} \cdot P \quad \cdots \quad (1)$$

[Formula 2

$$R2 + R3 = \frac{a}{L} \cdot P \quad \cdots \quad (2)$$

Thus, the position acquirer 323B uses the relationship described in Formula (1), for example, to calculate the distance a based on the weight P, the separation distance L, and/or the detected value R1 from the first weight sensor 231A (reactive force for the first weight sensor 231A). Alternatively, the position acquirer 323B uses the relationship described in Formula (2) to calculate the distance a based on the weight P, the separation distance L, and/or the detected values R2 and R3 from the second and third weight sensors 231B and 231C (reactive force for the second and third weight sensors 231B and 231C).

After step S2, based on the weight P (calculated in step S1) and the distance a (calculated in step S2) of the measured object W, the corrector 323C corrects the measurement coordinates calculated by the measurement coordinate calculator 53 (step S3: correcting step). Specifically, the correction amount calculator 323D calculates the amount of correction (particularly an amount of change in pitch $\Delta p$) for correcting the measurement coordinates of the measured object W in steps S3A and S3B, below. First, the correction amount calculator 323D particularly executes the following process in step S3A (deformation amount calculation protocol). Specifically, from the memory 33, the correction amount calculator 323D reads a total length L0 for the base 23 in the Y-axis direction (Figs. 3 and 4). Then, based on the total length L0, the weight P of the measured object W, and the distance a, the correction amount calculator 323D calculates an amount of deformation (particularly amount of deformation in the Z-axis direction: flexure $\omega$) of the base 23 at a position y in the Y-axis direction, which is based on the first placement position P1 of the first weight sensor 231A. For example, the correction amount calculator 323D calculates the flexure $\omega$ with Formula (3), below. Moreover, in Formula (3), E is the Young's modulus for the base 23 and I is the second moment of area for the base 23.
[Formula 3

$$\omega = \frac{P L^3}{6 E I} \cdot \frac{y}{L} \left(1 - \frac{a}{L}\right)\left(\frac{y^2}{L^2} - \frac{2a}{L} + \frac{a^2}{L^2}\right) \quad \cdots \quad (3)$$

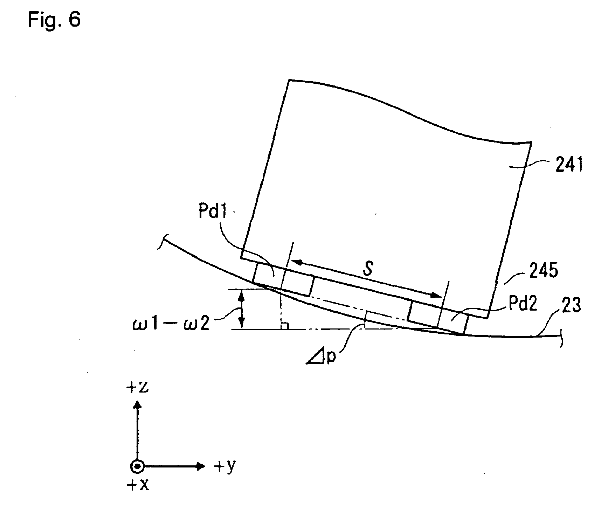

Fig. 6 is a frame view to describe the amount of change in pitch $\Delta p$. Specifically, Fig. 6 is a frame view of a portion of the base 23 deformed by placing the measured object W thereon and a portion of the column 241 (air bearing 245) positioned on the base 23, as viewed from a lateral direction (+X-axis side). For ease of description,

Fig. 6 illustrates only an upper surface as the base 23. Next, the correction amount calculator 323D executes the following process in step S3B. Specifically, from the memory 33, the correction amount calculator 323D reads a separation distance S (Fig. 6) in the Y-axis direction between the first air pad Pd1 (positioned on the -Y-axis side) and the second air pad Pd2 (positioned on the +Y-axis side). Then, when the column 241 (air bearing 245) is positioned at the position y as viewed from the X-axis direction, the correction amount calculator 323D calculates an angle at which the column 241 is inclined from the horizontal plane based on the separation distance S and the flexure $\omega$. This angle is calculated as the amount of change in pitch $\Delta p$ (Fig. 6).

For example, the correction amount calculator 323D calculates the amount of change in pitch $\Delta p$ with Formula (4), below. Moreover, as shown in Fig. 6, in Formula (4), $\omega 1$ indicates flexure obtained when the position of the first air pad Pd1 in the Y-axis direction, based on the first weight sensor 231A, is substituted for the position y in Formula (3). In addition, $\omega 2$ indicates flexure obtained when the position of the second air pad Pd2 in the Y-axis direction, based on the first weight sensor 231A, is substituted for the position y in Formula (3).

[Formula 4

$$\Delta p = \frac{\omega 1 - \omega 2}{S} \quad \cdots \quad (4)$$

After step S3B, based on the amount of change in pitch $\Delta p$, the corrector unit 323E corrects the measurement coordinates calculated by the measurement coordinate calculator 53 (step S3C: measurement coordinate correction protocol).

The first embodiment described above has the result described below. In the present embodiment, the measurement coordinates of the measured object W particularly are corrected by the weight acquiring step S1, the position acquiring step S2, and the correcting step S3. Therefore, the measurement coordinates of the measured object W may be corrected in light of not only the weight of the measured object W, but also the deformation of the base 23 in response to the position of the measured object W on the base 23. Accordingly, the deformation of the base 23 may be correctly surmised or assumed and/or the measurement accuracy of the measured object W may be sufficiently improved.

In the present embodiment, the measurement coordinate corrector 323 calculates the weight P of the measured object W particularly based on the detected values from each of the plurality of weight sensors 231 attached to the base 23. In addition, the measurement coordinate corrector 323 calculates or determines the position (distance a) of the measured object W on the base 23 particularly based on the first to third placement positions P1 - P3 of the plurality of weight sensors 231 and on the detected values from each. Thereby, compared to a case in which the measurement coordinate corrector 323 is configured to obtain information related to each of the weight of the measured object W and the position of the measured object W on the base 23, which has been input by the user via an inputter such as a mouse or a keyboard, for example, the input operation by the user may be omitted and convenience may be improved.

A method for correcting the measurement coordinates of the measured object W based on the weight P and the distance a of the measured object W may also be the following method. Specifically, as preliminary preparation, the weight and position of the measured object W placed on the base 23 is changed to a variety of weights and positions. The correction parameters for correcting the measurement coordinates of the measured object in each of these cases are calculated or determined, and the one or more correction parameters are stored in the memory 33 for each weight and position of the measured object W. Then, after the weight acquiring step S1 and the position acquiring step S2, the measurement coordinate corrector 323 reads the correction parameters corresponding to the weight P and the distance a of the measured object W from the memory 33. The measurement coordinate corrector 323 then corrects the measurement coordinates of the measured object W based on the correction parameter(s). In the present embodiment, after the weight acquiring step S1 and the position acquiring step S2, the measurement coordinate corrector 323 particularly calculates the amount of correction (amount of change in pitch $\Delta p$) based on the weight P and the distance a of the measured object W, then corrects the measurement coordinates of the measured object W based on the amount of

change in pitch $\Delta$p. Thereby, the preliminary preparations described above particularly become unnecessary and the time and effort involved in performing the measurement coordinate correction process can be largely reduced.

[Second Embodiment

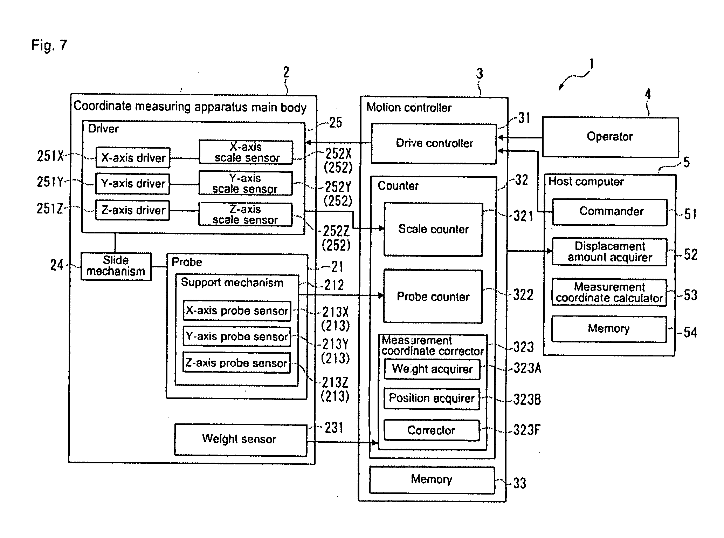

Next, a second particular embodiment of the present invention is described. Fig. 7 is a block diagram illustrating a schematic configuration of a three-dimensional measurer as an example of a further coordinate measuring device according to the second embodiment. Moreover, structures substantially same or similar to those in the first embodiment are given the same reference numerals below and a detailed description thereof is omitted. In the first embodiment, the corrector 323C (correction amount calculator 323D) calculated the amount of correction to correct the measurement coordinates of the measured object W based on the weight P and the distance a of the measured object W. The corrector 323C thus corrected the measurement coordinates of the measured object W based on the amount of correction. In contrast, in the present embodiment, by performing the above-described preliminary preparations, the correction parameters for each of the various weights P and distances a for the measured object W are stored ahead of time in the memory 33. Then, in the correcting step S3, a corrector unit 323F (Fig. 7) reads or retrieves the one or more correction parameters corresponding to the weight P and the distance a of the measured object W e.g. from the memory 33 to correct the measurement coordinates of the measured object W using the correction parameter(s). Moreover, a similar creation method (Fig. 3) to that of Japanese Patent Laid-open Publication No. 2005-214943, for example, may exemplify a correction parameter creation method.

According to the second embodiment described above, in addition to effects which are similar to the first embodiment, the following effects are obtained. In the present embodiment, there is no need for the corrector unit 323F to calculate the amount of correction to correct the measurement coordinates of the measured object W based on the weight P and/or the distance a of the measured object W in the correcting step S3, and thus the processing load on the host computer 5 can be largely reduced. In addition, when creating the correction parameters during the preliminary preparations, similar to Japanese Patent Laid-open Publication No. 2005-214943, correction parameters particularly can be calculated in which not only the pitch element but also other geometric errors (e.g., a roll element) can be corrected. In such a case, compared to the first embodiment, the roll element, for example, can be corrected in addition to the pitch element and measurement accuracy can be further improved.

The present invention is not limited to the above-described embodiments and may include modifications and improvements within the scope of achieving the object of the present invention. In each of the embodiments, the weight P and the position (distance a) of the measured object W were calculated based on the detected values from each of the plurality of weight sensors 231. However, the present invention is not limited to this. A user may also input the weight P and the position (distance a) with an inputter such as a mouse or a keyboard. In each of the embodiments, the number and placement positions of the weight sensors 231 are not limited to the number and placement positions described in the various embodiments and may have some other number and/or placement position. In the first embodiment, particularly only the pitch element (amount of change in pitch $\Delta$p) was calculated as the amount of correction to correct the measurement coordinates of the measured object W. However, the present invention is not limited to this. For example, in addition to the pitch element, the roll element may also be calculated and the measurement coordinates of the measured object W particularly may be corrected based on the pitch element as well as the roll element. In the first embodiment, the distance a, the flexure $\omega$, and the amount of change in pitch $\Delta$p may be obtained or determined using formulae other than Formulae (1) - (4), above.

The present invention may be used in a coordinate measuring device (such as a three-dimensional measurer) measuring a measured object placed on a base. It should be understood that the invention may be applied also to coordinate measuring devices measuring coordinates different from three-dimensional coordinates, e.g. to devices measuring two-dimensional coordinates or angular coordinates. Particularly, there is provided a measurement coordinate correction method correcting the measurement coordinates of a measured object placed on a base, in which the measurement coordinate correction method includes a weight acquiring step, a position acquiring step, and a correcting step. The weight acquiring step acquires information related to the weight of the measured object. The position acquiring step acquires information related to the position of the measured object on the base. The correcting step corrects the measurement coordinates of the measured object based on the weight and position of the measured object.

It is noted that the foregoing examples have been provided merely for the purpose of explanation and are in no way to be construed as limiting of the present invention. While the present invention has been described with reference to exemplary embodiments, it is understood that the words which have been used herein are words of description and illustration, rather than words of limitation. Changes may be made, within the purview of the appended claims, as presently stated and as amended, without departing from the scope and spirit of the present invention in its aspects. Although the present invention has been described herein with reference to particular structures, materials and embodiments, the present invention is not intended to be limited to the particulars disclosed herein; rather, the present invention extends to all functionally equivalent structures, methods and uses, such as are within the scope of the appended claims.

The present invention is not limited to the above described embodiments, and various variations and modifications may be possible without departing from the scope of the present invention as defined in the claims.

**Claims**

1.  A measurement coordinate correction method correcting measurement coordinates of a measured object (W) placed on a base (23), comprising:

    acquiring (S1) weight information related to a weight of the measured object (W);
    acquiring (S2) position information related to a position of the measured object (W) on the base (23); and
    correcting (S3) the measurement coordinates of the measured object (W) based on the weight and position of the measured object (W),
    wherein a plurality of weight sensors (231) are attached to the base (23), and wherein the method further comprises:

    detecting, via the weight sensors (231), a load from the measured object (W) placed on the base (23), wherein:

    said acquiring weight information (S1) comprises acquiring information related to the weight of the measured object (W) by calculating the weight of the measured object (W) based on a detected value from each of the plurality of weight sensors (231); and
    said acquiring position information (S2) comprises acquiring information related to the position of the measured object (W) by calculating the position of the measured object (W) based on placement positions (P1-P3) of the plurality of weight sensors (231) and the detected value from each of the plurality of weight sensors (231).

2.  The measurement coordinate correction method according to claim 1, wherein said correcting the measurement coordinates comprises:

    calculating (S3A), via a deformation amount calculation protocol, an amount of deformation ($\omega$; $\Delta p$) of the base (23) at a plurality of positions, particularly at each position, on the base (23) based on the weight and/or position of the measured object  (W); and
    correcting, via a measurement coordinate correction protocol, the measurement coordinates of the measured object (W) based on the amount of deformation ($\omega$; $\Delta p$) of the base (23).

3.  The measurement coordinate correction method according to claim 1 or 2, wherein said correcting the measurement coordinates (S3) comprises reading the correction parameters corresponding to the weight and position of the measured object (W) from a memory (54), then correcting the measurement coordinates of the measured object (W) based on the correction parameters.

4.  A computer program product comprising computer-readable instructions which, when loaded and executed on a suitable system perform the steps of a measurement coordinate correction method according to any one of the preceding claims.

5.  A coordinate measuring device for measuring a measured object (W) placed on a base (23), comprising:

    a weight acquirer (323A) configured to acquire information related to a weight of the measured object (W);
    a position acquirer (232B) configured to acquire information related to a position of the measured object (W) on the base (23); and
    a corrector (323C) configured to correct measurement coordinates of the measured object (W) based on the weight and position of the measured object (W), wherein a plurality of weight sensors (231) are attached to the base (23), wherein:

    the weight acquirer (323A) is configured to acquire, via the weight sensors (231), a load from the measured object (W) placed on the base (23), wherein information is acquired related to the weight of the measured object (W) by calculating the weight of the measured object (W) based on a detected value from each of the plurality of weight sensors (231); and

10

the position acquirer (232B) is arranged to acquire information related to the position of the measured object (W) by calculating the position of the measured object (W) based on placement positions (P1-P3) of the plurality of weight sensors (231) and the detected value from each of the plurality of weight sensors (231).

6. The coordinate measuring device according to claim 5, wherein said corrector (323C):

calculates, via a deformation amount calculation protocol, an amount of deformation ($\omega$; $\Delta p$) of the base 23) at a plurality of positions, particularly at each position, on the base (23) based on the weight and/or position of the measured object (W); and

corrects, via a measurement coordinate correction protocol, the measurement coordinates of the measured object (W) based on the amount of deformation ($\omega$; $\Delta p$) of the base (23).

7. The coordinate measuring device according to claim 5 or 6, wherein said corrector (323C) reads the correction parameters corresponding to the weight and position of the measured object (W) from a memory (54), then correcting the measurement coordinates of the measured object (W) based on the correction parameters.


**Patentansprüche**

1. Messkoordinaten-Korrekturverfahren, das Messkoordinaten eines ge- bzw. vermessenen Objekts (W) korrigiert, das auf einer Basis (23) platziert ist, umfassend:

Erhalten (S1) von Gewichtsinformationen betreffend ein Gewicht des vermessenen Objekts (W);
Erhalten (S2) von Positionsinformationen betreffend eine Position des vermessenen Objekts (W) auf der Basis (23); und
Korrigieren (S3) der Messkoordinaten des vermessenen Objekts (W) basierend auf dem Gewicht und der Position des vermessenen Objekts (W),
wobei eine Mehrzahl von Gewichtssensoren (231) an der Basis (23) angebracht sind, und wobei das Verfahren ferner umfasst:

Detektieren, über die Gewichtssensoren (231), einer Last von dem vermessenen Objekt (W), das auf der Basis (23) platziert ist, wobei:

das Erhalten von Gewichtsinformationen (S1) das Erhalten von Informationen betreffend das Gewicht des vermessenen Objekts (W) durch Berechnen des Gewichts des vermessenen Objekts (W) basierend auf einem detektierten Wert von jedem der Mehrzahl von Gewichtssensoren (231) umfasst; und
das Erhalten von Positionsinformationen (S2) das Erhalten von Informationen betreffend die Position des vermessenen Objekts (W) durch Berechnen der Position des vermessenen Objekts (W) basierend auf Platzierungspositionen (P1-P3) der Mehrzahl von Gewichtssensoren (231) und dem detektierten Wert von jedem der Mehrzahl von Gewichtssensoren (231) umfasst.

2. Messkoordinaten-Korrekturverfahren nach Anspruch 1, wobei das Korrigieren der Messkoordinaten umfasst:

Berechnen (S3A), über ein Deformationsbetrag-Berechnungsprotokoll, eines Betrags der Deformation ($\omega$; $\Delta p$) der Basis (23) an einer Mehrzahl von Positionen, insbesondere an jeder Position auf der Basis (23) basierend auf dem Gewicht und/oder der Position des vermessenen Objekts (W); und
Korrigieren, über ein Messkoordinaten-Korrekturprotokoll, der Messkoordinaten des vermessenen Objekts (W) basierend auf dem Betrag der Deformation ($\omega$; $\Delta p$) der Basis (23).

3. Messkoordinaten-Korrekturverfahren nach Anspruch 1 oder 2, wobei das Korrigieren der Messkoordinaten (S3) das Lesen der Korrekturparameter entsprechend dem Gewicht und der Position des vermessenen Objekts (W) aus einem Speicher (54), dann das Korrigieren der Messkoordinaten des vermessenen Objekts (W) basierend auf den Korrekturparametern umfasst.

4. Computerprogrammprodukt, umfassend computerlesbare Instruktionen, die, wenn auf einem geeigneten System geladen und ausgeführt, die Schritte eines Messkoordinaten-Korrekturverfahrens nach einem der vorhergehenden Ansprüche durchführen.

**5.** Koordinatenmessvorrichtung zum Messen eines ge- bzw. vermessenen Objekts (W), das auf einer Basis (23) platziert ist, umfassend:

eine Gewichtserhalteeinrichtung (323A), die konfiguriert ist, Gewichtsinformationen betreffend ein Gewicht des vermessenen Objekts (W) zu erhalten;
eine Positionserhalteeinrichtung (232B), die konfiguriert ist, Positionsinformationen betreffend eine Position des vermessenen Objekts (W) auf der Basis (23) zu erhalten; und
eine Korrektureinrichtung (323C), die konfiguriert ist, Messkoordinaten des vermessenen Objekts (W) basierend auf dem Gewicht und der Position des vermessenen Objekts (W) zu korrigieren, wobei eine Mehrzahl von Gewichtssensoren (231) an der Basis (23) angebracht sind, wobei:

die Gewichtserhalteeinrichtung (323A) konfiguriert ist, über die Gewichtssensoren (231) eine Last von dem vermessenen Objekt (W), das auf der Basis (23) platziert ist, zu erhalten, wobei Informationen betreffend das Gewicht des vermessenen Objekts (W) durch Berechnen des Gewichts des vermessenen Objekts (W) basierend auf einem detektierten Wert von jedem der Mehrzahl von Gewichtssensoren (231) erhalten werden; und
die Positionserhalteeinrichtung (232B) angeordnet bzw. bereitgestellt ist, Informationen betreffend die Position des vermessenen Objekts (W) durch Berechnen der Position des vermessenen Objekts (W) basierend auf Platzierungspositionen (P1-P3) der Mehrzahl von Gewichtssensoren (231) und dem detektierten Wert von jedem der Mehrzahl von Gewichtssensoren (231) zu erhalten.

**6.** Koordinatenmessvorrichtung nach Anspruch 5, wobei die Korrektureinrichtung (323C):

über ein Deformationsbetrag-Berechnungsprotokoll einen Betrag der Deformation ($\omega$; $\Delta p$) der Basis (23) an einer Mehrzahl von Positionen, insbesondere an jeder Position auf der Basis (23) basierend auf dem Gewicht und/oder der Position des vermessenen Objekts (W) berechnet; und
über ein Messkoordinaten-Korrekturprotokoll die Messkoordinaten des vermessenen Objekts (W) basierend auf dem Betrag der Deformation ($\omega$; $\Delta p$) der Basis (23) korrigiert.

**7.** Korrdinatenmessvorrichtung nach Anspruch 5 oder 6, wobei die Korrektureinrichtung (323C) die Korrekturparameter entsprechend dem Gewicht und der Position des vermessenen Objekts (W) aus einem Speicher (54) liest, dann die Messkoordinaten des vermessenen Objekts (W) basierend auf den Korrekturparametern korrigiert.

**Revendications**

**1.** Procédé de correction de coordonnées de mesure corrigeant des coordonnées de mesure d'un objet mesuré (W) placé sur une base (23), comprenant :

acquérir (S1) des informations de poids concernant un poids de l'objet mesuré (W);
acquérir (S2) des informations de position concernant une position de l'objet mesuré (W) sur la base (23) ; et
corriger (S3) les coordonnées de mesure de l'objet mesuré (W) en fonction du poids et de la position de l'objet mesuré (W),
dans lequel une pluralité de capteurs de poids (231) sont reliés à la base (23) et dans lequel le procédé comprend en outre :

détecter par le biais des capteurs de poids (231) une charge provenant de l'objet mesuré (W) placé sur la base (23), dans lequel :
ladite acquisition d'informations de poids (S1) comprend acquérir des informations concernant le poids de l'objet mesuré (W) en calculant le poids de l'objet mesuré (W) en fonction d'une valeur détectée provenant de chacun de la pluralité de capteurs de poids (231) ; et
ladite acquisition d'informations de position (S2) comprend acquérir des informations concernant la position de l'objet mesuré (W) en calculant la position de l'objet mesuré (W) en fonction de positions de placement (P1 à P3) de la pluralité de capteurs de poids (231) et de la valeur détectée provenant de chacun de la pluralité de capteurs de poids (231).

**2.** Procédé de correction de coordonnées de mesure selon la revendication 1, dans lequel ladite correction des coordonnées de mesure comprend :

calculer (S3A) par le biais d'un protocole de calcul de quantité de déformation une quantité de déformation (ω ; Δp) de la base (23) en une pluralité de positions, notamment en chaque position, sur la base (23) en fonction du poids et/ou de la position de l'objet mesuré (W) ; et

corriger par le biais d'un protocole de correction de coordonnées de mesure les coordonnées de mesure de l'objet mesuré (W) en fonction de la quantité de déformation (ω ; Δp) de la base (23).

3. Procédé de correction de coordonnées de mesure selon la revendication 1 ou 2, dans lequel ladite correction des coordonnées de mesure (S3) comprend lire les paramètres de correction correspondant au poids et à la position de l'objet mesuré (W) à partir d'une mémoire (54), puis corriger les coordonnées de mesure de l'objet mesuré (W) en fonction des paramètres de correction.

4. Produit de programme informatique comprenant des instructions lisibles par ordinateur qui, lors de leur chargement et exécution sur un système approprié, réalisent les étapes d'un procédé de correction de coordonnées de mesure selon l'une quelconque des revendications précédentes.

5. Dispositif de mesure de coordonnées pour mesurer un objet mesuré (W) placé sur une base (23), comprenant :

un dispositif d'acquisition de poids (323A) configuré pour acquérir des informations concernant un poids de l'objet mesuré (W) ;

un dispositif d'acquisition de position (232B) configuré pour acquérir des informations concernant une position de l'objet mesuré (W) sur la base( 23) ; et

un correcteur (323C) configuré pour corriger des coordonnées de mesure de l'objet mesuré (W) en fonction du poids et de la position de l'objet mesuré (W), dans lequel une pluralité de capteurs de poids (231) sont reliés à la base (23), dans lequel :

le dispositif d'acquisition de poids (323A) est configuré pour acquérir par le biais des capteurs de poids (231) une charge provenant de l'objet mesuré (W) placé sur la base (23), dans lequel des informations sont acquises concernant le poids de l'objet mesuré (W) en calculant le poids de l'objet mesuré (W) en fonction d'une valeur détectée provenant de chacun de la pluralité de capteurs de poids (231) ; et

le dispositif d'acquisition de position (232B) est agencé pour acquérir des informations concernant la position de l'objet mesuré (W) en calculant la position de l'objet mesuré (W) en fonction de positions de placement (P1 à P3) de la pluralité de capteurs de poids (231) et de la valeur détectée provenant de chacun de la pluralité de capteurs de poids (231).

6. Dispositif de mesure de coordonnées selon la revendication 5, dans lequel ledit correcteur (323C) :

calcule par le biais d'un protocole de calcul de quantité de déformation une quantité de déformation (ω ; Δp) de la base (23) en une pluralité de positions, notamment en chaque position, sur la base (23) en fonction du poids et/ou de la position de l'objet mesuré (W) ; et

corrige par le biais d'un protocole de correction de coordonnées de mesure les coordonnées de mesure de l'objet mesuré (W) en fonction de la quantité de déformation (ω ; Δp) de la base (23).

7. Dispositif de mesure de coordonnées selon la revendication 5 ou 6, dans lequel ledit correcteur (323C) lit les paramètres de correction correspondant au poids et à la position de l'objet mesuré (W) à partir d'une mémoire (54), puis corrige les coordonnées de mesure de l'objet mesuré (W) en fonction des paramètres de correction.

Fig. 1

EP 2 615 409 B1

Fig. 2

Fig. 3

Fig. 4

Fig. 5

```
        ┌─────────┐
        │  START  │
        └─────────┘
             │
             ▼
    ┌──────────────────┐ ──S1
    │ Calculate weight │
    │ of measured object│
    └──────────────────┘
             │
             ▼
    ┌──────────────────┐ ──S2
    │ Calculate position│
    │   of measured    │
    │  object on base  │
    └──────────────────┘
             │
    ┌ ─ ─ ─ ─│─ ─ ─ ─ ─ ─ ┐ ──S3
    │        ▼             │
    │ ┌──────────────────┐ │──S3A
    │ │ Calculate flexure│ │
    │ └──────────────────┘ │
    │        │             │
    │        ▼             │
    │ ┌──────────────────┐ │──S3B
    │ │ Calculate amount │ │
    │ │ of change in pitch│ │
    │ └──────────────────┘ │
    │        │             │
    │        ▼             │
    │ ┌──────────────────┐ │──S3C
    │ │     Correct      │ │
    │ └──────────────────┘ │
    └ ─ ─ ─ ─│─ ─ ─ ─ ─ ─ ┘
             │
             ▼
        ┌─────────┐
        │   END   │
        └─────────┘
```

Fig. 6

Fig. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005214943 A
- WO 2009013769 A1
- DE 10214489 A1